# EUROPÄISCHE PATENTSCHRIFT

(11) **EP 4 086 723 B1**
(45) Veröffentlichungstag und Bekanntmachung des Hinweises auf die Patenterteilung: **06.12.2023**
(21) Anmeldenummer: 22173549.1
(22) Anmeldetag: 30.04.2019
(51) Int. Cl.: G05D 1/02, B62D 15/02

(54) **FAHRERASSISTENZVERFAHREN, STEUERGERÄT UND FAHRZEUG MIT DEM STEUERGERÄT**
DRIVER ASSISTANCE METHOD, CONTROL DEVICE AND VEHICLE WITH THE CONTROL DEVICE
PROCÉDÉ D'AIDE À LA CONDUITE, APPAREIL DE COMMANDE ET VÉHICULE DOTÉ DE L'APPAREIL DE COMMANDE

(30) Priorität: 25.05.2018 DE 102018208277
(43) Veröffentlichungstag der Anmeldung: 09.11.2022
(62) Teilanmeldung aus: 19723044.4
(73) Patentinhaber: Robert Bosch GmbH, 70442 Stuttgart (DE)
(72) Erfinder: Preissler, Peter, 36460 Dorndorf (DE)

(56) Entgegenhaltungen:
- DE-A1-102010 023 162
- DE-A1-102016 122 215

## Beschreibung

Die vorliegende Erfindung betrifft ein Trainingsverfahren für ein Fahrerassistenzverfahren eines Fahrzeugs, das Fahrerassistenzverfahren, ein Steuergerät zur Durchführung des Trainingsverfahrens und zur Durchführung des Fahrerassistenzverfahrens sowie ein Fahrzeug mit dem Steuergerät.

### Stand der Technik

Das Dokument US 2010/0049402 A1 offenbart ein Fahrassistenzsystem zum Einparken eines Fahrzeugs, wobei eine Zielparkposition von einem Nutzer des Fahrassistenzsystems eingestellt werden kann.

Das Dokument US 9,522,675 B1 offenbart ein Parkkontrollsystem, wobei von einem Nutzer eine erste Auswahl zwischen einem parallelen Einparken und einem rechtwinkligen Einparken und eine zweite Auswahl zwischen rückwärtigen Einparken und einem vorwärts Einparken getroffen werden.
Sowohl die DE 10 2016 122215 A1 als auch die DE 10 2010 023162 A1 zeigen die folgenden Merkmale:
Fahrerassistenzverfahren für ein Fahrzeug mit den folgenden Verfahrensschritten
- Erfassung einer Starteingabe, und
- Erfassung einer Abfolge von Kamerabildern,
- Laden eines gespeicherten Fahrkorridors,
- Ermittlung einer assistierten Trajektorie in Abhängigkeit der erfassten Abfolge von Kamerabildern; und
- Ansteuerung des Fahrzeugs in Abhängigkeit der ermittelten assistierten Trajektorie, wobei ein Antriebsmotor und ein Lenkmotor des Fahrzeugs angesteuert werden.

Die Aufgabe der vorliegenden Erfindung ist es, eine Unterstützung eines Fahrers durch ein Fahrerassistenzverfahren an einem bekannten Ort zu verbessern.

### Offenbarung der Erfindung

Die obige Aufgabe wird gemäß der unabhängigen Ansprüche 1, 4 oder 5 gelöst. Die vorliegende Erfindung betrifft ein Trainingsverfahren für ein Fahrerassistenzverfahren eines Fahrzeugs, wobei das Fahrzeug zumindest eine Kamera umfasst. Zunächst erfolgt durch das Trainingsverfahren eine Erfassung einer Abfolge von Kamerabildern, insbesondere einer Videosequenz, während einer durch einen Nutzer geführten Trainingsfahrt des Fahrzeugs entlang einer gewünschten Trajektorie. Anders ausgedrückt fährt der Fahrer das Fahrzeug entlang einer von ihm gewünschten Trajektorie von einem Startpunkt zu einem Endpunkt, wobei während dieser Trainingsfahrt mittels der Kamera eine Videosequenz erfasst wird. Zum Beispiel fährt der Nutzer das Fahrzeug von einem Eingang einer Tiefgarage zu einem Parkplatz der Tiefgarage. In einem anderen Beispiel fährt der Nutzer das Fahrzeug von einer Position vor einer Einfahrt eines Grundstückes zu einem Parkplatz auf dem Grundstück. Anschließend wird entlang der gewünschten Trajektorie ein Fahrkorridor für das Fahrerassistenzverfahren in Abhängigkeit einer Bildverarbeitung der erfassten Abfolge von Kamerabildern ermittelt. Mit anderen Worten wird zu der durch den Nutzer gewünschten Trajektorie ein Toleranzbereich bestimmt, wobei der Toleranzbereich beziehungsweise der Fahrkorridor einen Bereich repräsentiert, in dem das Fahrzeug während einer späteren Durchführung des Fahrerassistenzverfahrens bewegt werden darf, beispielsweise zur Umfahrung von nicht-stationären Hindernissen. In einem nachfolgenden Schritt wird dem Nutzer die erfasste Abfolge von Kamerabildern und/oder eines in Abhängigkeit der erfassten Abfolge von Kamerabildern ermittelten Umgebungsmodells auf einem Display angezeigt. Bei dieser Darstellung wird der ermittelte Fahrkorridor als eine der Darstellung überlagerte Einblendung angezeigt. Während dieser Darstellung wird eine Eingabe des Nutzers zur Anpassung einer Begrenzung des ermittelten Fahrkorridors erfasst. Mit anderen Worten ändert der Nutzer die Begrenzung des ermittelten Fahrkorridors während der Darstellung. Danach erfolgt eine Anpassung des ermittelten Fahrkorridors in Abhängigkeit der erfassten Eingabe und eine Speicherung des ermittelten Fahrkorridors und/oder des angepassten Fahrkorridors in einem elektronischen Speicher des Fahrzeugs.

Durch die Bestimmung des Fahrkorridors mittels des Trainingsverfahrens entsteht der Vorteil, dass ein Fahrzeug während der Durchführung des Fahrerassistenzverfahrens halbautomatisch oder automatisch innerhalb des Fahrkorridors auf einer variablen Trajektorie bewegt werden kann, d.h. beispielsweise Hindernissen, wie einem Ball, ausweichen kann ohne, dass das Fahrerassistenzverfahren abgebrochen werden muss. Die Anpassung des Fahrkorridors durch den Nutzer weist darüber hinaus den Vorteil auf, dass beispielsweise das Befahren von Blumenbeeten oder einem Rasen oder das Überfahren von Bordsteinkanten während des Fahrerassistenzverfahrens verhindert wird. Somit werden unerwünschte Trajektorien während einer Durchführung des Fahrerassistenzverfahrens durch das Trainingsverfahren vermieden.

In einer bevorzugten Ausführung der Erfindung erfolgt während des Trainingsverfahrens eine Erfassung von Ortskoordinaten des Fahrzeugs. Die Ortskoordinaten können die Position relativ zu einem globalen Referenzpunkt (z.B. GPS-Koordinaten) oder relativ zu einer spezifischen Position beziehungsweise einem Referenzpunkt der gewünschten Trajektorie, z.B. einem Startpunkt der Trajektorie, darstellen. Anschließend erfolgt eine Zuordnung des gespeicherten Fahrkorridors zu den erfassten Ortskoordinaten. Durch diese Ausführung entsteht der Vorteil, dass das Fahrerassistenzverfahren an mehreren Orten mit einem ortsabhängig bestimmten Fahrkorridor durchgeführt werden kann und, dass das Fahrerassistenzverfahren halbautomatisch oder automatisch in Abhängigkeit einer Erfassung von Ortskoordinaten gestartet werden kann.

In einer besonders bevorzugten Ausführungsform erfolgt eine Erfassung von Abständen zwischen dem Fahrzeug und Objekten in der Umgebung des Fahrzeugs während der durch den Nutzer geführten Trainingsfahrt, wobei insbesondere ein Umgebungsmodell beziehungsweise eine Tiefenkarte in Abhängigkeit der erfassten Abstände bestimmt wird. Anschließend wird der Fahrkorridor zusätzlich in Abhängigkeit der erfassten Abstände beziehungsweise der Tiefenkarte beziehungsweise des Umgebungsmodells ermittelt. Dadurch wird vorteilhafterweise der Fahrkorridor relativ zur Umgebung genauer definiert. Außerdem werden in dieser Ausführungsform Objekte und/oder Hindernisse in der Umgebung, beispielsweise Bordsteinkanten, zuverlässiger erkannt. Darüber hinaus ergibt sich der Vorteil, dass die Erfassung von Bilddaten sowie deren Auswertung lediglich während des Trainingsverfahrens durchgeführt werden muss, während eine Fahrttrajektorie für eine spätere Durchführung des Fahrerassistenzverfahrens alternativ oder zusätzlich auf erfassten Abständen basiert werden kann, beispielsweise um das Fahrassistenzverfahren zuverlässig bei ungünstigen Licht- oder Witterungsverhältnisse durchzuführen oder allgemein die Genauigkeit des Fahrkorridors zu verbessern.

In einer Weiterführung erfolgt eine Erkennung von mindestens einem Segment, einer Segmentgrenze, einer Objektkante und/oder Objekten in Abhängigkeit einer Bildanalyse beziehungsweise Bildverarbeitung von zumindest einem erfassten Kamerabild und/oder in Abhängigkeit von erfassten Abstandsdaten. Beispielsweise erfolgt eine Segment- oder Objekterkennung mittels eines neuronalen Netzes, welches auf das jeweilige Erkennungsziel angelernt ist. Anschließend wird in der Darstellung der erfassten Abfolge von Kamerabildern und/oder des ermittelten Umgebungsmodells auf einem Display zusätzlich das erkannte Segment, die erkannte Segmentgrenze, die erkannte Objektkante und/oder das erkannte Objekt als eine der Darstellung überlagerte Einblendung angezeigt. Dadurch entsteht der Vorteil, dass der Nutzer bei der Eingabe zur Anpassung einer Begrenzung des ermittelten Fahrkorridors durch das angezeigte Segment, die angezeigte Segmentgrenze, die angezeigte Objektkante und/oder das angezeigte Objekt unterstützt wird. Optional oder alternativ erfolgt eine Voranpassung der Begrenzung des ermittelten Fahrkorridors in Abhängigkeit des erkannten Segments, der erkannten Segmentgrenze, der erkannten Objektkante und/oder des erkannten Objekts. Dadurch entsteht der Vorteil, dass die Eingabe zur Anpassung der Begrenzung des ermittelten Fahrkorridors dem Nutzer erleichtert und/oder der Fahrkorridor vor der Darstellung bzw. der Eingabe automatisch korrigiert wird.

In einer weiteren Ausgestaltung kann die Anpassung der Begrenzung des ermittelten Fahrkorridors in Abhängigkeit der Eingabe des Nutzers abschnittsweise entlang des ermittelten Fahrkorridors beziehungsweise entlang der gewünschten Trajektorie und/oder in Abhängigkeit von in der Darstellung angezeigten Markierungen an den Grenzen des eingeblendeten Fahrkorridors erfolgen. Beispielsweise kann der Nutzer die Begrenzung des ermittelten Fahrkorridors vorteilhafterweise mittels des Verschiebens eines Fingers auf einem Touch-Screen verändern. Durch diese Ausgestaltung der Erfindung wird die Eingabe zur Anpassung der Begrenzung des ermittelten Fahrkorridors erleichtert.

Ferner kann es vorgesehen sein, dass die Darstellung der erfassten Abfolge von Kamerabildern und/oder des ermittelten Umgebungsmodells auf einem Display eines mobilen elektronischen Gerätes und die Erfassung der Eingabe des Nutzers zur Anpassung der Begrenzung des ermittelten Fahrkorridors mittels des mobilen elektronischen Gerätes erfolgen. Dadurch wird die Bestimmung des Fahrkorridors durch den Nutzer komfortabler.

In einer anderen Ausgestaltung wird eine Zeiteingabe zur Durchführung des Fahrerassistenzverfahrens durch den Nutzer erfasst. Anschließend wird der gespeicherte Fahrkorridor der erfassten Zeiteingabe zugeordnet. Dadurch entsteht der Vorteil, dass beispielsweise ein morgendliches Ausparken des Fahrzeugs zu einer eingegebenen Uhrzeit automatisiert erfolgen kann, wodurch der zeitliche Aufwand und der Bedienungsaufwand des Nutzers reduziert werden.

Die Erfindung betrifft auch ein Fahrerassistenzverfahren für das Fahrzeug. Das Fahrerassistenzverfahren weist eine Erfassung einer Starteingabe auf. Vorzugsweise erfolgt die Starteingabe zum Start des Fahrerassistenzverfahrens durch den Nutzer. Alternativ kann die Starteingabe automatisiert in Abhängigkeit der zugeordneten Ortskoordinaten und/oder in Abhängigkeit der zugeordneten Zeiteingabe erfolgen. Nach der Starteingabe wird eine Erfassung einer Abfolge von Kamerabildern und/oder eine Erfassung von Abständen zwischen dem Fahrzeug und Objekten in einer Umgebung des Fahrzeugs durchgeführt. Danach wird der gespeicherte Fahrkorridor geladen, wobei der gespeicherte Fahrkorridor durch das erfindungsgemäße Trainingsverfahren bestimmt wurde. Eine Ermittlung von zumindest einer assistierten Trajektorie innerhalb des Fahrkorridors erfolgt anschließend in Abhängigkeit der Fahrzeuggeometrie, in Abhängigkeit der erfassten Abfolge von Kamerabildern und/oder der erfassten Abstände sowie in Abhängigkeit des geladenen Fahrkorridors. Im Anschluss daran wird eine Ansteuerung des Fahrzeugs in Abhängigkeit der ermittelten assistierten Trajektorie durchgeführt, so dass das Fahrzeug nur innerhalb des Fahrkorridors bewegt wird, wobei zumindest ein Antriebsmotor und/oder ein Lenkmotor des Fahrzeugs angesteuert werden. Durch das Fahrerassistenzverfahren wird vorteilhafterweise eine halbautomatische oder automatische Fahrt des Fahrzeugs von einem Startpunkt entlang einer situationsabhängigen assistierten Trajektorie zu einem Endpunkt beziehungsweise das Umfahren von Hindernissen innerhalb des Fahrkorridors ermöglicht, wobei der Fahrkorridor durch den Nutzer genau definiert wurde.

In einer bevorzugten Ausgestaltung erfolgt in dem Fahrerassistenzverfahren eine Erfassung von Ortskoordinaten des Fahrzeugs und das Laden des gespeicherten Fahrkorridors in Abhängigkeit der erfassten Ortskoordinaten.

Es kann des Weiteren vorgesehen sein, dass, wenn keine hindernisfreie, assistierte Trajektorie innerhalb des geladenen Fahrkorridors ermittelt wird, das Fahrerassistenzverfahren vor der Ansteuerung des Fahrzeugs eine optische und/oder akustische Anzeige einer Warnung für den Nutzer, insbesondere auf einem mobilen elektronischen Gerät, und einen Abbruch des Fahrerassistenzverfahrens aufweist.

Die Erfindung betrifft auch ein Steuergerät, wobei das Steuergerät dazu eingerichtet ist, ein erfindungsgemäßes Trainingsverfahren und ein erfindungsgemäßes Fahrerassistenzverfahren durchzuführen.

Die Erfindung betrifft auch das Fahrzeug mit dem erfindungsgemäßen Steuergerät.

Weitere Vorteile ergeben sich aus der nachfolgenden Beschreibung von Ausführungsbeispielen mit Bezug zu den Figuren.
- Figur 1:: Fahrzeug
- Figur 2:: Steuergerät
- Figur 3:: Ablaufdiagramm des Trainingsverfahrens als Blockschaltbild
- Figur 4:: Darstellung eines Umgebungsmodells mit gewünschter Trajektorie
- Figur 5:: Darstellung eines Umgebungsmodells mit eingeblendetem Fahrkorridor
- Figur 6:: Darstellung eines Umgebungsmodells mit vorangepasstem Fahrkorridor
- Figur 7:: Darstellung eines Umgebungsmodells mit angepasstem Fahrkorridor
- Figur 8:: Ablaufdiagramm des Fahrerassistenzverfahrens als Blockschaltbild

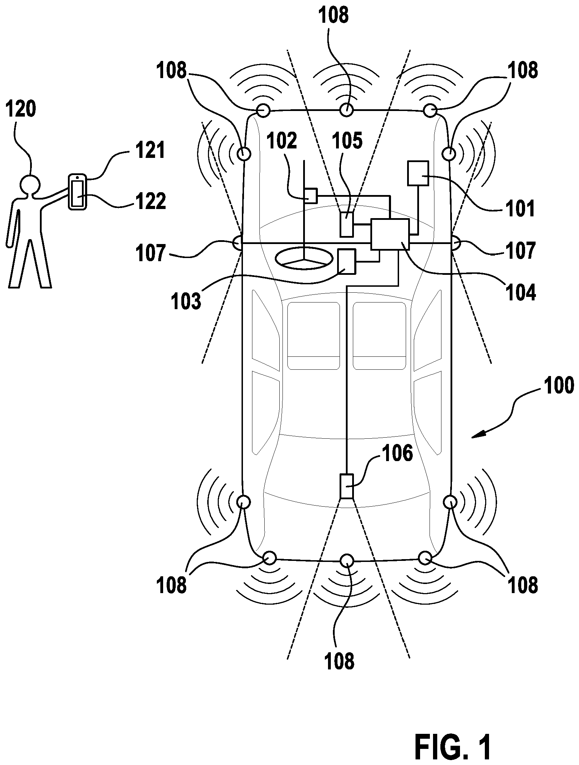

In Figur 1 ist ein Fahrzeug 100 in Aufsicht dargestellt. Das Fahrzeug 100 weist einen Antriebsmotor 101 zum Antrieb des Fahrzeugs 100 und einen Lenkmotor 102 zur Lenkung des Fahrzeugs 100 auf. Ein Steuergerät 104 des Fahrzeugs 100 ist dazu eingerichtet, den Antriebsmotor 101 und den Lenkmotor 102 anzusteuern. In dem Fahrzeug 100 ist des Weiteren ein Display 103 zur Anzeige von Informationen für den Nutzer des Fahrzeugs 100 angeordnet. Das Display 103 wird von einem Steuergerät 104 angesteuert und kann einen Touch-Screen zur Erfassung einer Eingabe des Nutzers oder alternative Eingabemittel umfassen. Das Steuergerät 104 ist dazu eingerichtet, Kameradaten bzw. erfasste Kamerabilder und/oder eine Abfolge von Kamerabildern beziehungsweise Videosequenzen von einer vorwärts gerichteten Kamera 105, einer rückwärts gerichteten Kamera 106 sowie von zwei seitlich angeordneten WeitwinkelKameras 107 zu erfassen und das Display 103 zur Anzeige dieser erfassten Kameradaten und/oder eines Umgebungsmodells anzusteuern. Die Kameras 105, 106 und 107 sind dazu eingerichtet, Kamerabilder bzw. Videosequenzen der Umgebung des Fahrzeugs 100 zu erfassen. Es können weitere Kameras angeordnet sein. Darüber hinaus weist das Fahrzeug 100 ein Ultraschallsensorsystem auf. Das Ultraschallsensorsystem umfasst in diesem Beispiel zehn Ultraschallsensoren 108, welche mit dem Steuergerät 104 verbunden sind. Das Steuergerät 104 ist demnach dazu eingerichtet, die mittels der Ultraschallsensoren 108 erfassten Abstände zwischen dem Fahrzeugs 100 und Objekten in der Umgebung des Fahrzeugs 100 zu erfassen. Ferner kann ein mobiles elektronisches Gerät 121 mit einer Anzeigevorrichtung 122 über eine kabellose Funkverbindung mit dem Steuergerät 104 des Fahrzeug 100 verbunden sein, wobei die Anzeigevorrichtung 122 ein Touch-Screen zur Erfassung einer Eingabe des Nutzers 120 oder alternative Eingabemittel des mobilen elektronischen Geräts 121 aufweisen kann.

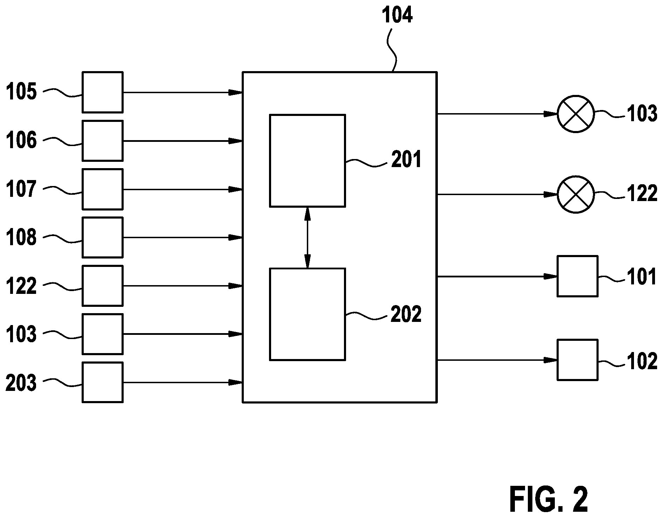

In Figur 2 ist das Steuergerät 104 des Ausführungsbeispiels von Figur 1 als Blockschaltbild dargestellt. Das Steuergerät 104 erfasst Kameradaten, d.h. Kamerabilder und/oder eine Abfolge von Kamerabildern bzw. eine Videosequenz, von der nach vorne gerichteten Kamera 105, der nach hinten gerichteten Kamera 106 sowie der zwei seitlichen angeordneten Weitwinkelkameras 107. Ferner erfasst das Steuergerät 104 Abstandsdaten von den Ultraschallsensoren 108 des Ultraschallsensorsystems. Darüber hinaus ist das Steuergerät 104 dazu eingerichtet, eine Eingabe des Nutzers mittels eines Touch-Screens des Displays 103 oder der Anzeigevorrichtung 122 und/oder eines anderen Eingabemittels 203 zu erfassen, wobei das Eingabemittel 203 beispielsweise am Lenkrad des Fahrzeugs 100 angeordnet ist. Die Verbindung mit dem Touch-Screen 122 des mobilen elektronischen Gerätes 121 erfolgt mittels einer kabellosen Funkverbindung. Das Steuergerät weist ferner eine Recheneinheit 201 auf, welche mit einem elektronischen Speicher 202 des Steuergeräts 104 verbunden ist. Das Steuergerät 104 ist dazu eingerichtet, das Display 103, die Anzeigevorrichtung 122, den Antriebsmotor 101 und/oder den Lenkmotor 102 anzusteuern.

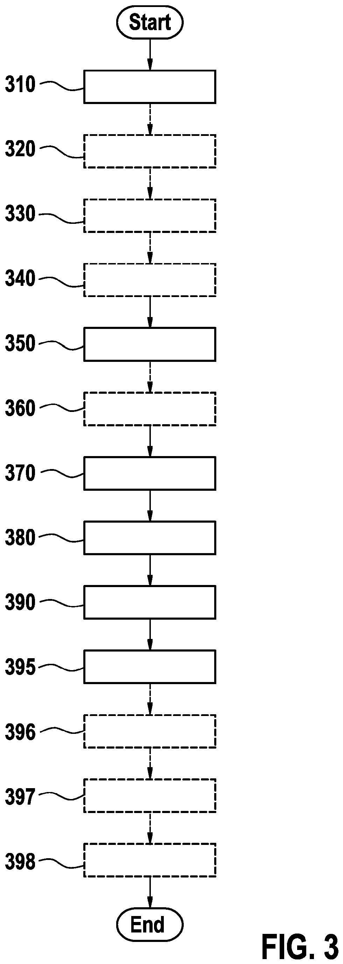

In Figur 3 ist ein Ablaufdiagramm eines Trainingsverfahrens eines Fahrerassistenzverfahrens als Blockschaltbild dargestellt. Zunächst wird in einem Schritt 310 während einer Durchführung des Trainingsverfahrens durch den Nutzer, d.h. während der Nutzer das Fahrzeug 100 entlang einer gewünschten Trajektorie von einem Startpunkt zu einem Endpunkt bewegt, zumindest eine Abfolge von Kamerabildern von der Umgebung des Fahrzeugs 100 mittels der mindestens einen Kamera 105, 106 und/oder 107 erfasst. In einem weiteren Schritt 320 kann eine Erfassung von Abständen mittels des Ultraschallsensorsystems bzw. den Ultraschallsensoren 108 vorgesehen sein. Optional kann zusätzlich eine Erfassung 330 von Ortskoordinaten des Fahrzeugs 100 erfolgen. Durch eine Bildanalyse 340 zumindest eines Kamerabildes der erfassten Abfolge von Kamerabildern können optional in dem Kamerabild ferner Objekte, Objektgrenzen, Segmente und/oder Segmentgrenzen erkannt werden. Die Erkennung durch die Bildanalyse 340 erfolgt beispielsweise mittels eines durch eine Vielzahl von Trainingsdaten angelernten neuronalen Netzes. Anschließend erfolgt eine Ermittlung 350 eines Fahrkorridors für das Fahrerassistenzverfahren entlang der gewünschten Trajektorie in Abhängigkeit einer Bildverarbeitung der erfassten Abfolge von Kamerabildern. In einem einfachen Ausführungsbeispiel entspricht der ermittelte Fahrkorridor dem während des Trainingsverfahrens abgefahrenen Fahrschlauch beziehungsweise Fahrbereich entlang der gewünschten Trajektorie des Fahrzeugs 100, wobei der Fahrkorridor bevorzugt den abgefahrenen Fahrschlauch und einen zusätzlichen Toleranzbereich umfasst. Der Toleranzbereich erweitert den abgefahrenen Fahrschlauch beispielsweise seitlich um 1 cm bis 5 m. Der Fahrkorridor repräsentiert einen während des Fahrerassistenzverfahrens für eine Bewegung des Fahrzeugs 100 erlaubten bzw. befahrbaren Bereich. Es kann optional vorgesehen sein, dass in einem Schritt 360 der ermittelte Fahrkorridor in Abhängigkeit von dem erkannten Segment, der erkannten Segmentgrenze, der erkannten Objektkante und/oder des erkannten Objekts in der Umgebung des Fahrzeugs 100 vorangepasst wird. Im Anschluss wird in dem Schritt 370 die erfasste Abfolge von Kamerabildern und/oder eines in Abhängigkeit der erfassten Abfolge von Kamerabildern ermittelten Umgebungsmodells auf dem Display 103, 122 angezeigt. Dieser Anzeige wird zumindest der ermittelte oder vorangepasste Fahrkorridor als Einblendung überlagert. In einem weiteren Schritt 380 wird eine Eingabe des Nutzers zur Anpassung einer Begrenzung des ermittelten Fahrkorridors während der Darstellung 370 erfasst. Beispielsweise kann der Nutzer die Begrenzung des Fahrkorridors auf einem Touch-Screen des Displays 103 oder 122 durch eine Bewegung eines Fingers leicht verschieben. Die Erfassung 380 der Eingabe des Nutzers kann abschnittsweise entlang des ermittelten Fahrkorridors bzw. der gewünschten Trajektorie und/oder in Abhängigkeit von in der Darstellung angezeigten Markierungen an den Grenzen des eingeblendeten Fahrkorridors erfolgen. Der Nutzer definiert damit den zu speichernden Fahrkorridor selbstständig. Anschließend erfolgt eine Anpassung 390 des ermittelten Fahrkorridors in Abhängigkeit der im Schritt 380 erfassten Eingabe. Schließlich wird der ermittelte bzw. vorangepasste Fahrkorridor oder der durch den Fahrer angepasste Fahrkorridor in einem Schritt 395 gespeichert. Optional kann eine Zuordnung 396 des gespeicherten Fahrkorridors zu den erfassten Ortskoordinaten erfolgen. Darüber hinaus kann es optional vorgesehen sein, dass eine Erfassung 397 einer Zeiteingabe zur Durchführung des Fahrerassistenzverfahrens durch den Nutzer erfolgt und, dass diese Zeiteingabe dem gespeicherten Fahrkorridor in einem Schritt 398 zugeordnet wird.

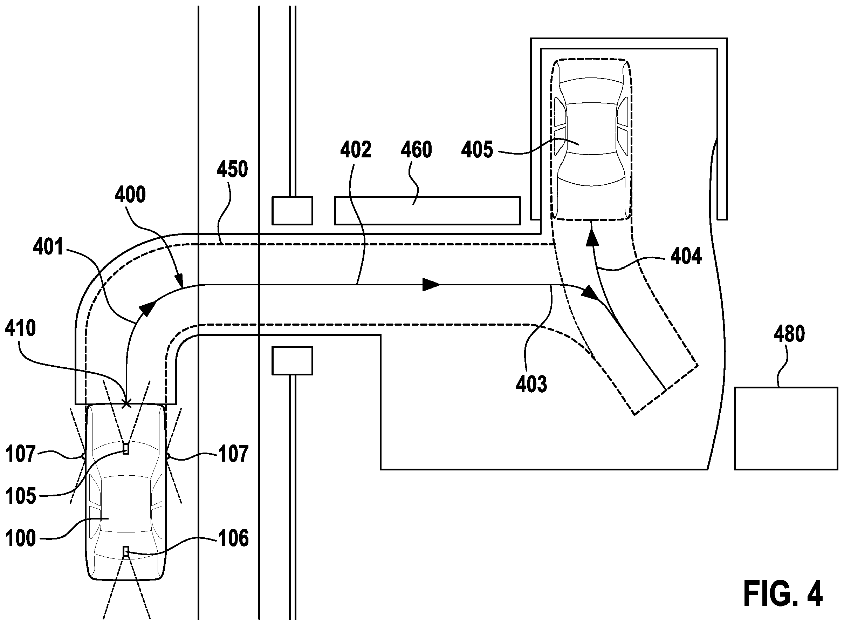

In Figur 4 ist ein Umgebungsmodell mit überlagerter Einblendung der abgefahrenen beziehungsweise gewünschten Trajektorie 400 dargestellt. Der Nutzer fährt diese gewünschte Trajektorie 400 während des Trainingsverfahrens durch manuelle Lenkung mit dem Fahrzeug 100 von einer Startposition 410 zu einer Endposition bzw. Parkposition 405 ab. Während dieser Trainingsfahrt erfassen die Kameras 105, 106 und/oder 107 die Umgebung des Fahrzeugs 100. Das dargestellte Umgebungsmodell wird in Abhängigkeit der mittels der Kameras 105, 106 und/oder 107 erfassten Kamerabilder und/oder in Abhängigkeit der mittels der Ultraschallsensoren 108 erfassten Abstände ermittelt. Die Trajektorie 400 besteht beispielsweise, wie in Figur 4 dargestellt, aus mehreren Fahrtabschnitten 401, 402, 403, 404, 405 und 410, d.h. einer ersten Rechtskurve 401, einer Gradeausfahrt 402, einer zweiten Rechtskurve 403 und einem Zurücksetzen 404 im Rückwärtsgang sowie der Startposition 410 und der Endposition 405. Des Weiteren ist ein gestrichelt dargestellter Fahrschlauch 450 erkennbar. Der Fahrschlauch 450 repräsentiert den durch das Fahrzeug 100 während der Trainingsfahrt tatsächlich befahrenen Bereich. Der für das Fahrzeug 100 prinzipiell befahrbare Bereich ist nicht gleichmäßig um den Fahrschlauch 450 verteilt, beispielsweise sollte das direkt neben dem Fahrschlauch liegende Blumenbeet 460 und ein Kinderspielplatz 480 während eines Fahrassistenzverfahrens nicht überfahren werden.

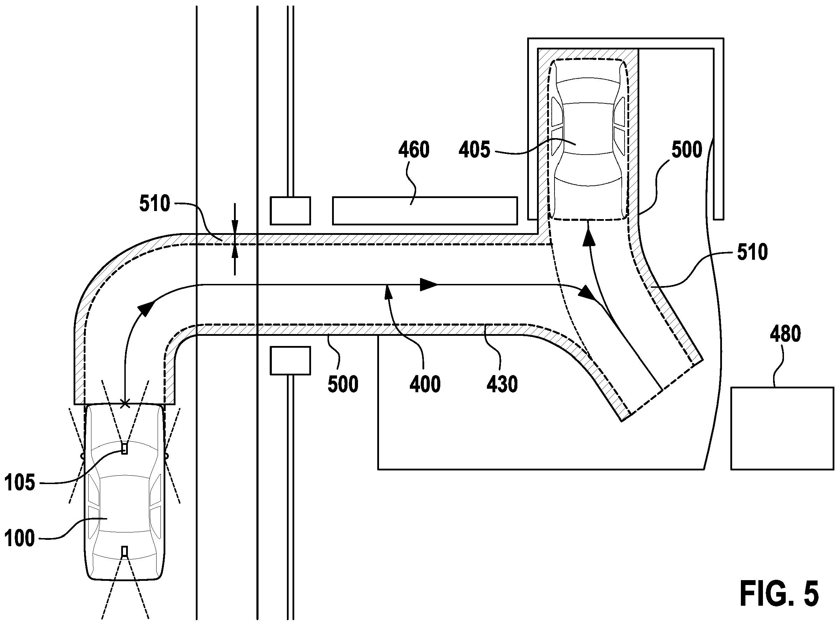

In Figur 5 ist ein Umgebungsmodell gemäß der Figur 4 mit eingeblendetem ermittelten Fahrkorridor 500 dargestellt. Der Fahrschlauch 450 liegt innerhalb des ermittelten Fahrkorridors 500. Es ist ersichtlich, dass der ermittelte Fahrkorridor 500 den abgefahrenen Fahrschlauch 450 um einen hier schraffiert dargestellten Toleranzbereich 510 erweitert, welcher somit während des später durchzuführenden Fahrerassistenzverfahrens ebenfalls von dem Fahrzeug befahren werden darf.

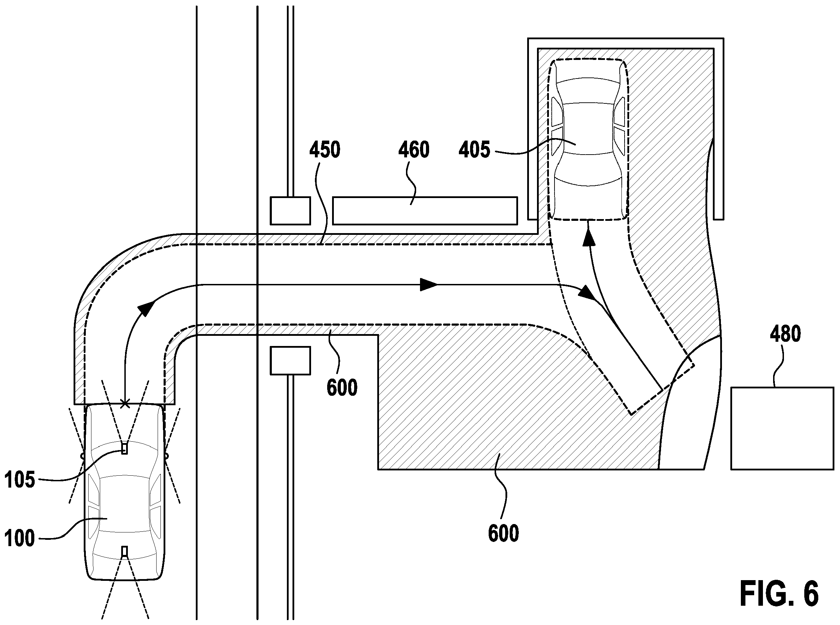

In Figur 6 ist ein Umgebungsmodell gemäß der Figuren 4 und 5 mit eingeblendetem vorangepasstem Fahrkorridor 600 dargestellt. Es ist ersichtlich, dass der ermittelte Fahrkorridor aufgrund eines mittels einer Bildverarbeitung erkannten Segments zu asphaltiertem Boden erweitert wird. Zusätzlich wurde ein Kinderspielplatz-Segment mittels einer Bildverarbeitung erkannt, wobei zu diesem Bereich ein vorgegebener Mindestabstandsbereich vorgesehen ist. Der vorangepasste Fahrkorridor wird folglich in Abhängigkeit des ermittelten Fahrkorridors, der erkannten Segmente "asphaltierter Boden" und "Kinderspielplatz" angepasst. Optional oder zusätzlich können in der Darstellung des eingeblendeten Fahrkorridors erkannte Segmente, erkannte Segmentgrenzen, erkannte Objekte und/oder erkannte Objektgrenzen als Einblendung hervorgehoben werden, so dass sich ein Nutzer während der Erfassung der Eingabe zur Anpassung der Begrenzung des eingeblendeten Fahrkorridors an einem erkannten Segment, erkannten Segmentgrenzen, einem erkannten Objekt und/oder erkannten Objektgrenzen leicht orientieren kann.

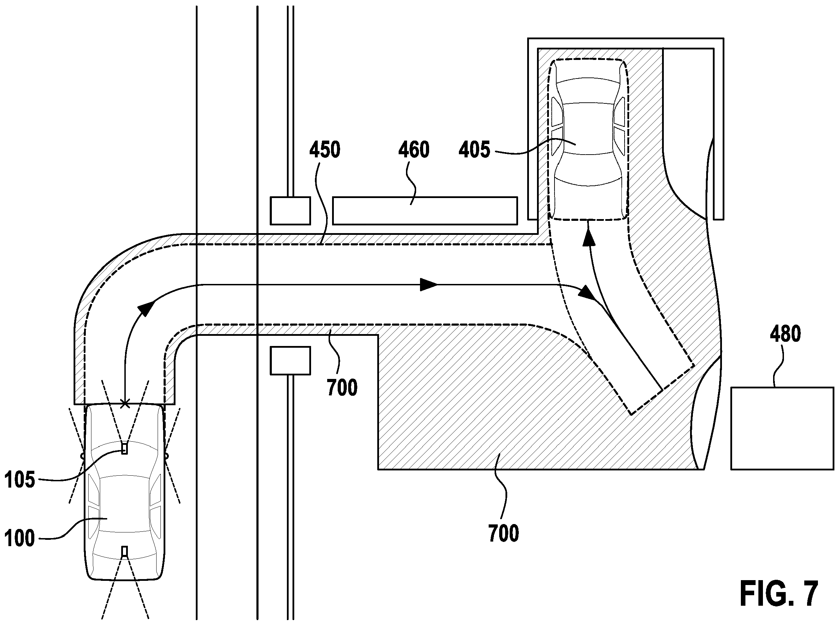

Figur 7 zeigt eine Darstellung eines Umgebungsmodells gemäß der Figuren 4 bis 6, wobei dem Umgebungsmodell ein durch den Nutzer angepasster Fahrkorridor (700) als Einblendung überlagert ist. Es ist ersichtlich, dass der Nutzer die Begrenzung des vorangepassten Fahrkorridors an bestimmten Stellen verändert hat, beispielsweise durch eine Verschiebung der Begrenzung des vorangepassten Fahrkorridors in Figur 6 mittels eines Finger-Ziehens auf einem Touch-Screen, so dass der angepasste Fahrkorridor bestimmte Bereiche nicht mehr oder zusätzlich enthält.

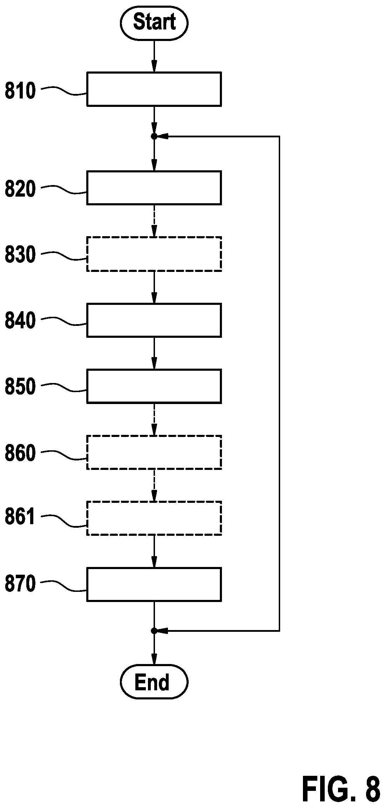

In Figur 8 ist ein Ablaufdiagramm des Fahrerassistenzverfahrens als Blockschaltbild dargestellt. Das Fahrerassistenzverfahren beginnt mit einer Erfassung 810 einer Starteingabe. Dieser Verfahrensschritt kann durch eine manuelle Eingabe des Nutzers oder automatisiert in Abhängigkeit erfasster aktueller Ortskoordinaten des Fahrzeugs 100 erfolgen. Anschließend wird im Schritt 820 eine Abfolge von Kamerabildern und/oder Abständen zwischen dem Fahrzeug 100 und Objekten in einer Umgebung des Fahrzeugs 100 erfasst. Diese Erfassung 820 wird während des gesamten Fahrerassistenzverfahrens laufend durchgeführt. In einem weiteren Verfahrensschritt 840 wird der gespeicherte Fahrkorridor 500, 600 oder 700 von der Recheneinheit 201 des Steuergeräts 104 aus dem elektronischen Speicher 202 des Steuergeräts 104 geladen. Das Laden 840 erfolgt optional in Abhängigkeit von in einem optionalen Schritt 830 erfassten Ortskoordinaten. Anschließend ermittelt die Recheneinheit 201 in dem Schritt 850 zumindest eine assistierte Trajektorie in Abhängigkeit einer Fahrzeuggeometrie, in Abhängigkeit der erfassten Abfolge von Kamerabildern und/oder der erfassten Abstände sowie in Abhängigkeit des geladenen Fahrkorridors 500, 600 oder 700. Die Fahrzeuggeometrie des Fahrzeugs 100 ist beispielsweise ebenfalls in dem Speicher 202 hinterlegt. Die assistierte Trajektorie kann von der während des Trainingsverfahrens abgefahrenen Trajektorie in beliebiger Weise abweichen. Allerdings liegt die assistierte Trajektorie immer innerhalb des geladenen Fahrkorridors 500, 600 oder 700. Daraufhin erfolgt eine beispielsweise zeitlich verzögerte Ansteuerung 870 des Fahrzeugs 100 in Abhängigkeit der ermittelten assistierten Trajektorie, wobei zumindest ein Antriebsmotor 101 und/oder ein Lenkmotor 102 des Fahrzeugs 100 beispielsweise automatisch angesteuert werden. Dadurch kann der Nutzer des Fahrerassistenzverfahrens beispielsweise an der Startposition bzw. kurz nach der Starteingabe das Fahrzeug 100 verlassen. Es kann des Weiteren vorgesehen sein, dass der Nutzer, beispielsweise auf einem mobilen elektronischen Gerät 121 gewarnt und das Fahrerassistenzverfahren beendet wird, wenn im Schritt 850 keine hindernisfreie, assistierte Trajektorie innerhalb des geladenen Fahrkorridors 700 ermittelt werden kann. Die Erfassung 820 der Abfolge von Kamerabildern und/oder Abständen, die Ermittlung 840 der assistierten Trajektorie, die Warnung 860 sowie der Abbruch 861 und die Ansteuerung 870 des Fahrzeugs 100 werden bis zum Erreichen der Zielposition 405 wiederholt, so dass beispielsweise die ermittelte assistierte Trajektorie laufend aktualisiert beziehungsweise angepasst werden kann.

## Patentansprüche

1. Fahrerassistenzverfahren für ein Fahrzeug (100), aufweisend die folgenden Verfahrensschritte
• Erfassung (810) einer Starteingabe, und
• Erfassung (820) einer Abfolge von Kamerabildern und/oder Abständen zwischen dem Fahrzeug (100) und Objekten in einer Umgebung des Fahrzeugs (100),
• Laden (840) eines gespeicherten Fahrkorridors (700), wobei der Fahrkorridor (700) durch ein Trainingsverfahren bestimmt wurde,
• Ermittlung (850) von zumindest einer assistierten Trajektorie in Abhängigkeit der Fahrzeuggeometrie, in Abhängigkeit der erfassten Abfolge von Kamerabildern und/oder der erfassten Abstände sowie in Abhängigkeit des geladenen Fahrkorridors (500, 600, 700),
• Ansteuerung (870) des Fahrzeugs (100) in Abhängigkeit der ermittelten assistierten Trajektorie, wobei zumindest ein Antriebsmotor (101) und/oder ein Lenkmotor (102) des Fahrzeugs (100) angesteuert werden, **dadurch gekennzeichnet, dass** der folgende Verfahrensschritt durchgeführt wird
• die Erfassung (810) der Starteingabe in Abhängigkeit einer dem geladenen Fahrkorridor (700) zugeordneten Zeitangabe automatisch erfolgt.

2. Fahrerassistenzverfahren nach Anspruch 1, **dadurch gekennzeichnet, dass** das Fahrerassistenzverfahren die folgenden Schritte aufweist
• Erfassung (830) von Ortskoordinaten des Fahrzeugs (100), und
• Laden (840) des gespeicherten Fahrkorridors (500, 600, 700) in Abhängigkeit der erfassten Ortskoordinaten.

3. Fahrerassistenzverfahren nach einem der Ansprüche 1 oder 2, **dadurch gekennzeichnet, dass** das Fahrerassistenzverfahren vor der Ansteuerung des Antriebsmotors und/oder des Lenkmotors folgenden Schritt aufweist
• Warnung (860) des Nutzers, insbesondere auf einem mobilen elektronischen Gerät (121), und Abbruch (861) des Fahrerassistenzverfahrens, wenn keine hindernisfreie assistierte Trajektorie innerhalb des geladenen Fahrkorridors (500, 600, 700) ermittelt werden kann.

4. Steuergerät (104), wobei das Steuergerät (104) dazu eingerichtet ist, ein Fahrerassistenzverfahren nach einem der Ansprüche 1 bis 3 durchzuführen.

5. Fahrzeug (100) mit einem Steuergerät (104) nach Anspruch 4.

## Claims

1. Driver assistance method for a vehicle (100), having the following method steps
• detecting (810) a start input, and
• capturing/measuring (820) a sequence of camera images and/or distances between the vehicle (100) and objects in surroundings of the vehicle (100),
• loading (840) a stored travel corridor (700), the travel corridor (700) having been determined by way of a training method,
• ascertaining (850) at least one assisted trajectory on the basis of the vehicle geometry, on the basis of the captured sequence of camera images and/or the measured distances and on the basis of the loaded travel corridor (500, 600, 700),
• controlling (870) the vehicle (100) on the basis of the ascertained assisted trajectory, at least one drive motor (101) and/or a steering motor (102) of the vehicle (100) being controlled, **characterized in that** the following method step is performed
• the start input is automatically detected (810) on the basis of a time statement assigned to the loaded travel corridor (700).

2. Driver assistance method according to Claim 1, **characterized in that** the driver assistance method has the following steps
• acquiring (830) location coordinates of the vehicle (100), and
• loading (840) the stored travel corridor (500, 600, 700) on the basis of the acquired location coordinates.

3. Driver assistance method according to either of Claims 1 and 2, **characterized in that** the driver assistance method has the following step before controlling the drive motor and/or the steering motor
• warning (860) the user, in particular on a mobile electronic device (121), and terminating (861) the driver assistance method if it is not possible to ascertain an obstacle-free assisted trajectory within the loaded travel corridor (500, 600, 700).

4. Control unit (104), the control unit (104) being configured to perform a driver assistance method according to one of Claims 1 to 3.

5. Vehicle (100) having a control unit (104) according to Claim 4.

## Revendications

1. Procédé d'assistance au conducteur d'un véhicule (100), ledit procédé comprenant les étapes suivantes
• acquérir (810) une entrée de démarrage, et
• acquérir (820) une séquence d'images de caméra et/ou des distances entre le véhicule (100) et des objets situés dans l'environnement du véhicule (100),
• charger (840) un couloir de roulement (700) mémorisé, le couloir de circulation (700) ayant été déterminé par un procédé d'apprentissage,
• déterminer (850) au moins une trajectoire assistée en fonction de la géométrie du véhicule, en fonction de la séquence d'images de caméra acquise et/ou des distances acquises et en fonction du couloir de circulation chargé (500, 600, 700),
• commander (870) le véhicule (100) en fonction de la trajectoire assistée déterminée, au moins un moteur d'entraînement (101) et/ou un moteur de direction (102) du véhicule (100) étant commandé, **caractérisé en ce que** l'étape de procédé suivante est réalisée
• effectuer automatiquement l'acquisition (810) de l'entrée de démarrage en fonction d'une spécification de temps associée au couloir de circulation chargé (700) .

2. Procédé d'assistance au conducteur selon la revendication 1, **caractérisé en ce que** le procédé d'assistance au conducteur comporte les étapes suivantes
• acquérir (830) des coordonnées de localisation du véhicule (100), et
• charger (840) le couloir de circulation mémorisé (500, 600, 700) en fonction des coordonnées de localisation acquises.

3. Procédé d'assistance au conducteur selon l'une des revendications 1 ou 2, **caractérisé en ce que** le procédé d'assistance au conducteur comporte l'étape suivante avant que le moteur d'entraînement et/ou le moteur de direction soit activé
• avertir (860) l'utilisateur, notamment sur un appareil électronique mobile (121), et arrêter (861) le procédé d'assistance à la conduite si aucune trajectoire assistée sans obstacle ne peut être déterminée dans le couloir de circulation chargé (500, 600, 700).

4. Appareil de commande (104), l'appareil de commande (104) étant conçu pour mettre en œuvre un procédé d'assistance à la conduite selon l'une des revendications 1 à 3.

5. Véhicule (100) comprenant un appareil de commande (104) selon la revendication 4.
